# EUROPEAN PATENT APPLICATION

(11) **EP 1 694 059 A1**
(43) Date of publication of application: **23.08.2006**
(21) Application number: 06250393.3
(22) Date of filing: 25.01.2006
(51) Int. Cl.: H04N 5/235, H04N 5/217, G03B 7/00

(54) **Mechanical shutter devices forimage sensor**

(30) Priority: 17.02.2005 US 61404
(71) Applicant: OmniVision Technologies, Inc., Sunnyvale, California 94089 (US)
(72) Inventor: He, Xinping, San Jose California 95148 (US); Yang, Hongli, Cupertino California 95014 (US)
(74) Representative: Hackney, Nigel John

(57) **Abstract**

Mechanical shutter devices for image sensors and associated methods are disclosed. In one aspect of the invention, an imaging system includes an image sensor having an array of pixels with photosensitive elements. The imaging system can further include a signal processing device coupled to the image sensor to receive signals from the image sensor. The system can still further include a shutter device having an open and a closed position. The shutter device can be located proximate to the photosensitive elements of the pixels so that when the shutter device is in the open position, light is allowed to reach the photosensitive elements of the pixels, and when the shutter device is in the closed position, all substantial amounts of light are prevented from reaching the photosensitive elements of the pixels. The image sensor can be configured to store the signals until the signal processing device can receive the signals.

## Description

The present invention relates to mechanical shutter devices for image sensors, including digital cameras with mechanical shutters.

Image sensors have become ubiquitous. They are widely used in digital still cameras, cellular phones, security cameras, medical equipment, automobiles, and other applications. The technology used to manufacture image sensors, and in particular CMOS image sensors, has continued to advance at a great pace. For example, the demands of higher resolution and lower power consumption have encouraged the further miniaturization and integration of the image sensor. Additionally, image sensors and sensor components have become increasingly better able to store electrical charges or signals for longer periods of time (e.g., they have less voltage decay or leakage).

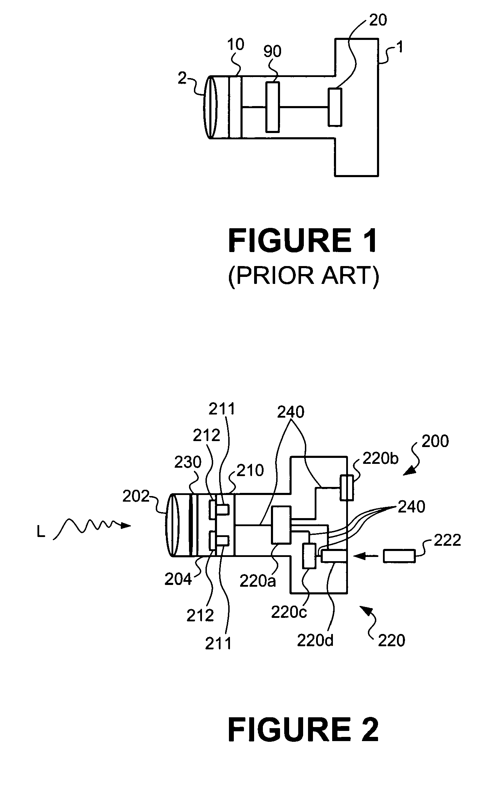

Figure 1 is an illustration of a typical digital camera 1 in accordance with the prior art. The camera 1 includes a lens 2, an image sensor 10, a buffer 90, and a digital signal processor 20. A typical image sensor includes a pixel array of rows and columns comprised of individual pixels. Each pixel includes a light sensitive region. To capture an image, the light sensitive regions provide output signals corresponding to the amount of light that reaches each light sensitive region during an exposure period. These signals are read out and the image sensor 10 sends them to the digital signal processor 20 for processing. The pixels are then reset for use during another exposure period.

Because the output signals from the light sensitive regions correspond to the amount of light that reaches each light sensitive region during the exposure period, the duration of the exposure period must be controlled or the image quality produced by the signals can be degraded (e.g., over or under exposed). The duration of the exposure period can be controlled by the duration of time between resetting the pixels (e.g., using a digital shutter process). For example, the pixels can be reset to start the exposure period, the light sensitive regions can send signals based on the amount of light that reaches them, and the pixels can be reset to end the exposure period. This can require the signals from the image sensor 10 to be read out at a rate that is higher than the digital signal processor 20 can accept (e.g., faster than the signal processor's maximum input rate). Additionally, with certain image sensors 10, if the signals from the image sensor 10 (e.g., from the pixels of the image sensor) are not read out quickly enough, charge decay or leakage can cause signal degradation and affect image quality. Accordingly, memories and/or buffers 90 (e.g., dynamic random access memories or static random access memories) are often required to buffer the signals flowing from the pixels and/or the light sensitive regions of the image sensor 10 to the digital signal processor 20. The buffers 90 can accept the signals at the required output rate from the image sensor 10 and then send the signals to the digital signal processor 20 at a suitable rate (e.g., a slower rate).

### SUMMARY

Mechanical shutter devices for image sensors, including digital cameras with mechanical shutters, and associated methods are disclosed herein. In one aspect of the invention, an imaging system includes an image sensor having an array of pixels, with each pixel having a photosensitive element. The imaging system can further include a signal processing device operatively coupled to the image sensor to receive signals from the image sensor. The system can still further include a shutter device having an open and a closed position. The shutter device can be located proximate to the photosensitive elements of the pixels so that when the shutter device is in the open position, light is allowed to reach the photosensitive elements of the pixels, and when the shutter device is in the closed position, all substantial amounts of light are prevented from reaching the photosensitive elements of the pixels. The shutter device can be placed in the closed position while the signal processing device receives at least a portion of the signals from the image sensor and the image sensor can be configured to store the signals until the signal processing device can receive the signals.

In a first aspect the present invention provides an imaging system according to Claim 1.

### BRIEF DESCRIPTION OF THE DRAWINGS

Figure 1 is a partially schematic cross-sectional illustration of a digital camera having a buffer between an image sensor and a digital signal processor in accordance with the prior art.

Figure 2 is a partially schematic cross-sectional illustration of an imaging system in accordance with embodiments of the present invention.

Figure 3 is a schematic diagram of a pixel in accordance with embodiments of the present invention.

Figure 4 is a schematic diagram of another pixel in accordance with other embodiments of the present invention.

Figure 5 is a partially schematic illustration of a mechanical shutter system in a closed position in accordance with embodiments of the present invention.

Figure 6 is a partially schematic illustration of a mechanical shutter system in an open position in accordance with embodiments of the present invention.

### DETAILED DESCRIPTION

In the following description, numerous specific details are provided in order to give a thorough understanding of embodiments of the invention. One skilled in the relevant art will recognize, however, that the invention may be practiced without one or more of the specific details, or with other methods, components, materials, etc. In other instances, well known structures, materials, or operations are not shown or described in order to avoid obscuring aspects of the invention.

References throughout the specification to "one embodiment" or "an embodiment" means that a particular feature, structure, or characteristic described in connection with the embodiment is included in at least one embodiment of the present invention. Thus, the appearances of the phrase "in one embodiment" or "in an embodiment" in various places throughout the specification are not necessarily all referring to the same embodiment. Furthermore, the particular features, structures, or characteristics may be combined in any suitable manner in one or more embodiments.

Figure 2 is a partially schematic cross-sectional illustration of an imaging system 200 in accordance with embodiments of the present invention. Although the imaging system 200 in Figure 2 includes a digital camera, in other embodiments the digital imaging system can include other types of imaging systems (e.g., an infrared imaging system). In the illustrated embodiment, the imaging system 200 includes a lens 202, a mechanical shutter device 230, an image sensor 210, and one or more signal processing devices 220.

In the illustrated embodiment, the image sensor 210 includes an array of pixels 211, with each pixel having a photosensitive element 212 (e.g., photogates, photodiodes, pinned photodiodes, partially pinned photodiodes, etc.). In the illustrated embodiment, only two pixels 211 having photosensitive elements 212 are shown for the purpose of illustration. In other embodiments, the image sensor can have more or fewer pixels 211 with photosensitive elements 212, including millions of pixels 211 with photosensitive elements 212.

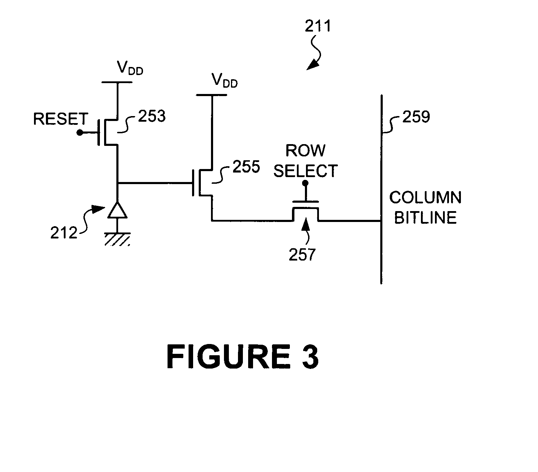

In certain embodiments, the image sensor 210 can include a complementary metal oxide semiconductor (CMOS) device. For example, Figure 3 is a schematic diagram of a three transistor (3T) CMOS active pixel 211 in accordance with embodiments of the invention. A photosensitive element 212 outputs a signal that is used to modulate an amplification transistor 255. The amplification transistor is also known as a source-follower transistor. During an integration period, the photosensitive element 212 captures light and outputs a signal indicative of the amount of light incident onto that photosensitive element 212. The signal is used to modulate the amplification transistor 255. After the integration period, a reset transistor 253 is used to reset the level of the photosensitive element 212 to a reference level (e.g., V_{dd}). Finally, a row select transistor 257 is used as a means to address the pixel 211 and to selectively read out the signal from the pixel 211 onto a column bit line 259.

In other embodiments, the image sensor 210 can have other arrangements. For example, in certain embodiments the image sensor can include a charge coupled device (CCD). In other embodiments, the image sensor 210 can include photosensitive elements 212 that are sensitive to various spectrums of light (e.g., the visual spectrum and/or the infrared spectrum).

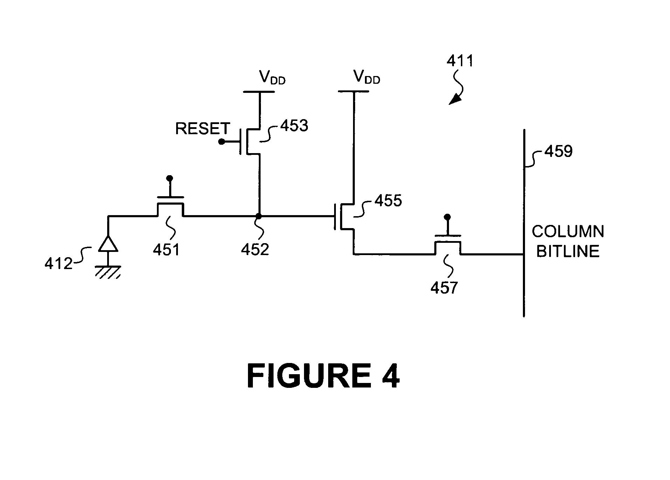

In still other embodiments, the image sensor can include CMOS pixels having other transistor arrangements. For example, the image sensor can include a four transistor (4T) CMOS pixel 411 as shown in Figure 4. The 4T CMOS pixel 411 is similar to the 3T CMOS pixel shown in Figure 3, but includes a transfer transistor 451 and a floating node 452. During an integration period, the photosensitive element 412 captures light and outputs a signal indicative of the amount of light incident onto that photosensitive element 412. The transfer transistor 451 is used to transfer the signal from the photosensitive element 412 to a floating node 452 (also referred to as a floating diffusion). The signal on the floating node 452 is then used to modulate the amplification transistor 455. Finally, a row select transistor 457 is used as a means to address the pixel 411 and to selectively read out the signal from the pixel 411 onto a column bit line 459. After the signal is read out from the pixel 411, a reset transistor 453 is used to reset the floating node 452 to a reference voltage.

Referring again to Figure 2, each pixel 211 can provide an output signal based on, or corresponding to, the amount of light L that reaches each photosensitive element 212 during an integration period (also referred to as an exposure period or accumulation period). The image sensor 210 can collect the output signal of each pixel 211 (e.g., via column bit line(s)) and send the signals or corresponding signals via one or more signal paths 240 to at least one signal processor 220. In the illustrated embodiment, the imaging system 200 includes four signal processing devices 220, including an image control device 220a (e.g., a device that can perform digital zoom features, image cropping, and/or image compression), a liquid crystal display 220b, a built-in data storage unit 220c (e.g., flash memory), and a data storage device 220d with a removable medium 222 (e.g., SmartMedia or Compact Flash card devices). In other embodiments, the imaging system 200 can include more or fewer and/or different signal processors 220. For example, in certain embodiments the image sensor 210 can include a CCD and at least one of the signal processors 220 can include an analog to digital converter.

In the illustrated embodiment, the photosensitive elements 212 of the pixels 211 are carried by a housing 204 made of a substantially light impervious material. The housing 204 can have an opening with the mechanical shutter device 230 located proximate to the opening so that when the shutter device 230 is in the closed position all substantial amounts of light L are prevented from reaching the photosensitive elements 212 (e.g., no light L reaches the photosensitive elements 212 or only negligible amounts of light L that are insufficient to affect the imaging process reach the photosensitive elements 212). When the shutter device 230 is placed in an open position, light L enters the imaging system 200 through the lens 202, passes through the open shutter device 230, and reaches the photosensitive elements 212. The shutter device 230 can remain in the open position for the duration of the integration period and then be placed in the closed position. While the shutter is in the closed position, the image sensor 210 can send at least a portion of the signals from the pixel(s) corresponding to the amount of light L the photosensitive element(s) 212 where exposed to during the integration period, to the signal processor(s) 220.

For example, in certain embodiments, the image sensor 210 can begin sending signals to the signal processor(s) 220 while the shutter device 230 is open and finish sending the remaining signals after the shutter device 230 is closed. While the shutter device 230 is in the open position, the amount of light L that reaches the photosensitive elements 212 determines the electrical charge carried by the photosensitive elements 212. Once the shutter device 230 is closed, the electrical charge carried by the photosensitive elements 212 and/or other portions of the image sensor 210 (e.g., in the case of a 4T CMOS pixel the charge carried by the floating node) can remain generally constant for a certain period of time, except for normal voltage decay or leakage. During this period of time, the signal from any unread pixel(s) can be read out and the image sensor 210 can send corresponding signals (e.g., the pixel and/or the image sensor can modulate, amplify, and/or otherwise modify the signal from the photosensitive element 212) to the signal processor(s) 220. This can allow the image sensor 210 to store the signals and to output signals at a rate suitable for receipt by the signal processor(s) 220. This feature can negate the need for a memory or buffer element (e.g., a dynamic random access memory or a static random access memory) between the image sensor 210 and the signal processor(s) 220.

In other embodiments, the imaging system 200 can have other arrangements. For example, in certain embodiments the image sensor 210 can send all of the corresponding signals to the signal processor(s) 220 after the shutter device 230 is closed. In other embodiments, the image system 200 can have more, fewer, and/or different elements. For example, in certain embodiments the imaging system 200 does not include a lens 202.

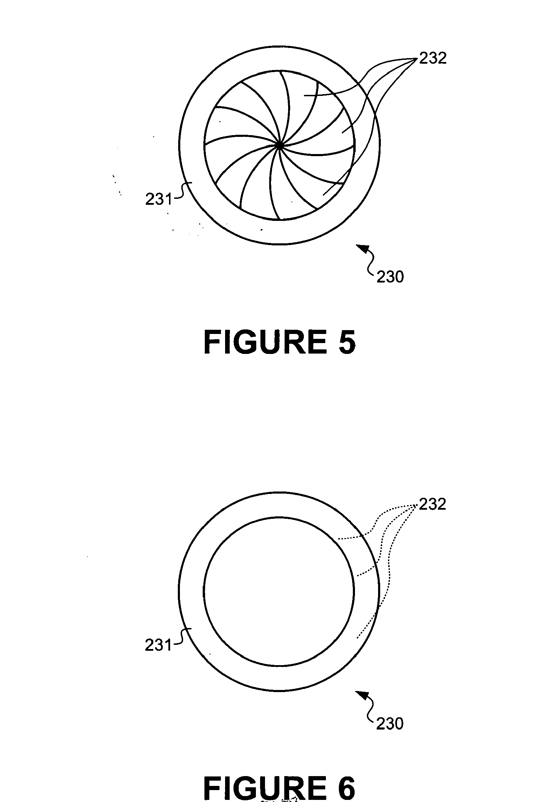

The shutter device can include various types of shutters well known in the art, including the shutter device 230 shown schematically in Figures 5 and 6. In Figure 5, the shutter device 230 is shown in the closed position where multiple retractable elements 232 cover an aperture in a frame 231. In Figure 6, the shutter device 230 is shown in the open position where the retractable elements 232 have been retracted into the frame 231 and the aperture in the frame 231 is at least partially uncovered. In certain embodiments, the shutter device 230 can have other positions, for example, the shutter device 230 can have multiple open positions where the retractable elements are only partially removed from the aperture in the frame 231. In other embodiments, the duration of time the shutter device remains in the open position is selectable to adjust the integration time for various lighting conditions. In still other embodiments, the shutter device 230 can include other arrangements, for example, the shutter device 230 can include a flip-type door device commonly seen on single reflex cameras.

A feature of embodiments discussed above is that they can reduce the need for a buffer between an image sensor and a signal processor in an imaging system because the shutter device can prevent light from over saturating the photosensitive elements while signals from the image sensor are being sent to one or more signal processors. This can reduce the complexity of the imaging system. An advantage of this reduced complexity can be a reduction in manufacturing time and/or cost.

From the foregoing, it will be appreciated that specific embodiments of the invention have been described herein for purposes of illustration, but that various modifications may be made without deviating from the invention. Accordingly, the invention is not limited except as by the appended claims.

## Claims

1. An imaging system comprising:
an image sensor having an array of pixels, each pixel having a photosensitive element;
a signal processing device operatively coupled to the image sensor to receive signals from the image sensor; and
a shutter device having an open and a closed position, the shutter device being located proximate to the photosensitive elements of the pixels so that when the shutter device is in the open position light is allowed to reach the photosensitive elements of the pixels and when the shutter device is in the closed position all substantial amounts of light are prevented from reaching the photosensitive elements of the pixels, the shutter device being placed in the closed position while the signal processing device receives at least a portion of the signals from the image sensor, the image sensor being configured to store the signals until the signal processing device can receive the signals.

2. The system of claim 1 wherein the signal processing device includes at least one of a data storage unit, a liquid crystal display, an image control device, and a compression device.

3. The system of claim 1 wherein the signal processing device is operatively coupled to the image sensor to receive signals from the pixels of the image sensor.

4. The system of claim 1, further comprising a housing made of substantially light impervious material, the housing having an opening and carrying the photosensitive elements of the pixels, the shutter device being located proximate to the opening so that when the shutter device is in the open position light is allowed to reach the photosensitive elements of the pixels and when the shutter device is in the closed position all substantial amounts of light are prevented from reaching the photosensitive elements of the pixels.

5. The system of claim 1 wherein the image sensor, the signal processing device, and the shutter device are carried by a camera.

6. An imaging system comprising:
an image sensor having an array of pixels, each pixel having a photosensitive element;
a signal processing device operatively coupled to the image sensor to receive signals from the image sensor; and
a light control means for allowing light to reach the photosensitive elements of the pixels for a selected period of time and for preventing all substantial amounts of light from reaching the photosensitive elements of the pixels while the signal processing device receives at least a portion of the signals from the image sensor, the image sensor being configured to store the signals until the signal processing device can receive the signals.

7. The system of claim 6 wherein the signal processing device is operatively coupled to the image sensor to receive signals from the pixels of the image sensor.

8. The system of claim 6 wherein the image sensor, the signal processing device, and the shutter device are carried by a camera body.

9. A method for making an imaging system comprising:
operatively coupling a signal processing device to an image sensor to receive signals from the image sensor, the image sensor having an array of pixels, each pixel having a photosensitive element; and
locating a shutter device having an open and a closed position proximate to the photosensitive elements of the pixels so that when the shutter device is in the open position light is allowed to reach the photosensitive elements of the pixels and when the shutter device is in the closed position all substantial amounts of light are prevented from reaching the photosensitive elements of the pixels, the shutter device being placed in the closed position while the signal processing device receives at least a portion of the signals from the image sensor, the image sensor being configured to store the signals until the signal processing device can receive the signals.

10. The method of claim 9 wherein operatively coupling a signal processing device to an image sensor includes operatively coupling an image sensor to at least one of a data storage unit, a liquid crystal display, an image control device, and a compression device.

11. The method of claim 9 wherein operatively coupling a signal processing device to an image sensor includes operatively coupling a signal processing device to an image sensor to receive signals from the pixels of the image sensor.

12. The method of claim 9, further comprising placing the photosensitive elements of the pixels in a housing made of substantially light impervious material, the housing having an opening, and wherein locating a shutter device includes locating a shutter device proximate to the opening so that when the shutter device is in the open position light is allowed to reach the photosensitive elements of the pixels and when the shutter device is in the closed position all substantial amounts of light are prevented from reaching the photosensitive elements of the pixels.

13. The method of claim 9, further comprising installing the image sensor, the signal processing device, and the shutter device in a camera body.
